# FASCICULE DE BREVET EUROPEEN

(11) **EP 0 922 970 B1**
(45) Date de publication et mention de la délivrance du brevet: **16.08.2000**
(21) Numéro de dépôt: 98470030.2
(22) Date de dépôt: 03.12.1998
(51) Int. Cl.: G01V 8/10

(54) **Dispositif de détection de source chaude**
Vorrichtung zur Erfassung einer Wärmequelle
Device for detecting a heat source

(30) Priorité: 10.12.1997 FR 9715904
(43) Date de publication de la demande: 16.06.1999
(73) Titulaire: Manu, Lorraine, 57365 Ennery (FR)
(72) Inventeur: Gismondi, Hector, 57000 Metz (FR)
(74) Mandataire: Ballot, Paul Denis Jacques

(56) Documents cités:
- EP-A- 0 875 775
- DE-A- 3 918 998
- US-A- 5 214 408
- US-A- 5 627 518
- US-A- 5 703 368

## Description

L'invention concerne un dispositif de détection de source chaude. L'invention s'applique en particulier aux systèmes de détection de personnes à partir de véhicules, et peut aussi s'appliquer plus généralement aux dispositifs mobiles faisant de la détection de sources chaudes.

Bien que l'invention ait été réalisée pour la détection de personnes risquant d'entrer en collision avec un véhicule, elle peut très bien être utilisée pour repérer les mouvements d'une source chaude à l'aide d'un détecteur fixe dans un site où il existe une variation de bruit thermique importante.

Des systèmes de détection de présence utilisant l'infrarouge passif sont très utilisés pour des systèmes d'alarmes fixes ce qui rend leur coût très intéressant. Des dispositifs connus utilisent des capteurs qui détectent les variations de température dans un lieu donné. Les capteurs infrarouge de variation thermique permettent de s'affranchir du bruit de fond thermique statique (notamment dû à la température ambiante et à la température du dispositif de détection). Les systèmes de détection déterminent qu'il y a présence ou absence d'une source chaude lorsque la variation dépasse un certain seuil. Un tel dispositif est par exemple connu du document US-5 627 518. Un problème survient lorsque l'on utilise de tels capteurs de manière mobile car le bruit de fond thermique ambiant varie en fonction des déplacements du système de détection et comporte une composante variable.

Un premier but de l'invention est de réaliser un dispositif de détection de présence à infrarouge passif pouvant être embarqué et remédiant au problème exposé précédemment.

Par ailleurs, pour les véhicules industriels, il est utilisé des dispositifs qui émettent un signal sonore lors de marche arrière afin de prévenir les personnes qui se trouvent derrière les véhicules. Les personnes étant amenées à travailler dans des lieux où des véhicules manoeuvrent en permanence (hangar, quai de chargement,...) entendent continuellement les différents signaux sonores émis par les véhicules venant de plusieurs directions simultanément. Ce bruit provoque un phénomène d'accoutumance qui rend inefficace l'émission des signaux sonores servant à prévenir les personnes. Par ailleurs, il a été observé dans des entrepôts que des conducteurs de chariots élévateurs sabotaient volontairement l'avertisseur sonore, haut-parleur ou bruiteur de leur engin pour ne plus l'entendre.

Un deuxième but de l'invention est de supprimer le phénomène d'accoutumance en utilisant un détecteur de présence couplé à un avertisseur afin de ne déclencher l'avertisseur que lorsqu'une personne est détectée.

L'invention a pour objet un dispositif avertisseur comportant une entrée de commande, et des moyens avertisseurs, un dispositif de détection de source chaude qui comporte au moins un capteur infrarouge fonctionnant dans une gamme de température définie et fournissant une information de présence relative aux déplacements d'un type de source chaude ayant une température comprise dans la gamme de températures définie, et en ce que les moyens avertisseurs s'activent uniquement si l'entrée de commande est activée et si le dispositif de détection indique la présence du type de source chaude. Le dispositif de détection comporte en outre des moyens de déclenchement pour déclencher régulièrement de manière répétitive un étalonnage, et des moyens pour enregistrer un nouveau seuil de référence lors de chaque étalonnage.

Préférentiellement, le dispositif de détection de source chaude comporte des moyens de mise en forme pour mettre en forme l'information de présence, et des moyens de comparaison pour comparer l'information de présence avec un seuil de référence afin de déterminer la présence ou l'absence d'un type de source chaude défini. Le dispositif de détection comporte au moins trois capteurs, chaque capteur ayant des moyens de mise en forme qui lui sont propres. La multiplicité des capteurs entraînant une meilleure couverture de l'espace à surveiller.

L'invention concerne aussi un véhicule terrestre, ayant la possibilité de rouler dans une direction à visibilité réduite pour le conducteur, qui comporte le dispositif avertisseur précédemment défini, l'entrée de commande étant activée lorsque le véhicule se dirige dans la direction à visibilité réduite.

L'invention a aussi pour objet un procédé de détection de source chaude dans lequel on produit une information de présence relative aux déplacements d'une source chaude à l'aide d'un capteur infrarouge fonctionnant dans une gamme de températures définie, on met en forme l'information de présence, on compare l'information de présence après mise en forme avec un seuil de référence pour déterminer la présence ou l'absence d'un type de source chaude défini, on déclenche régulièrement de manière répétitive un étalonnage du dispositif, et on enregistre un nouveau seuil de référence lors de chaque étalonnage.

Préférentiellement, l'étalonnage comporte une succession de mesures de bruit ambiant que l'on utilise pour déterminer le nouveau seuil de référence.

L'invention sera mieux comprise et d'autres particularités et avantages apparaîtront à la lecture de la description qui va suivre, la description faisant référence aux dessins annexés parmi lesquels:
la figure 1 représente un dispositif avertisseur utilisant un détecteur selon l'invention;
la figure 2 représente un exemple de disposition à trois capteurs;
les figures 3 et 4 représentent des véhicules équipés selon l'invention.

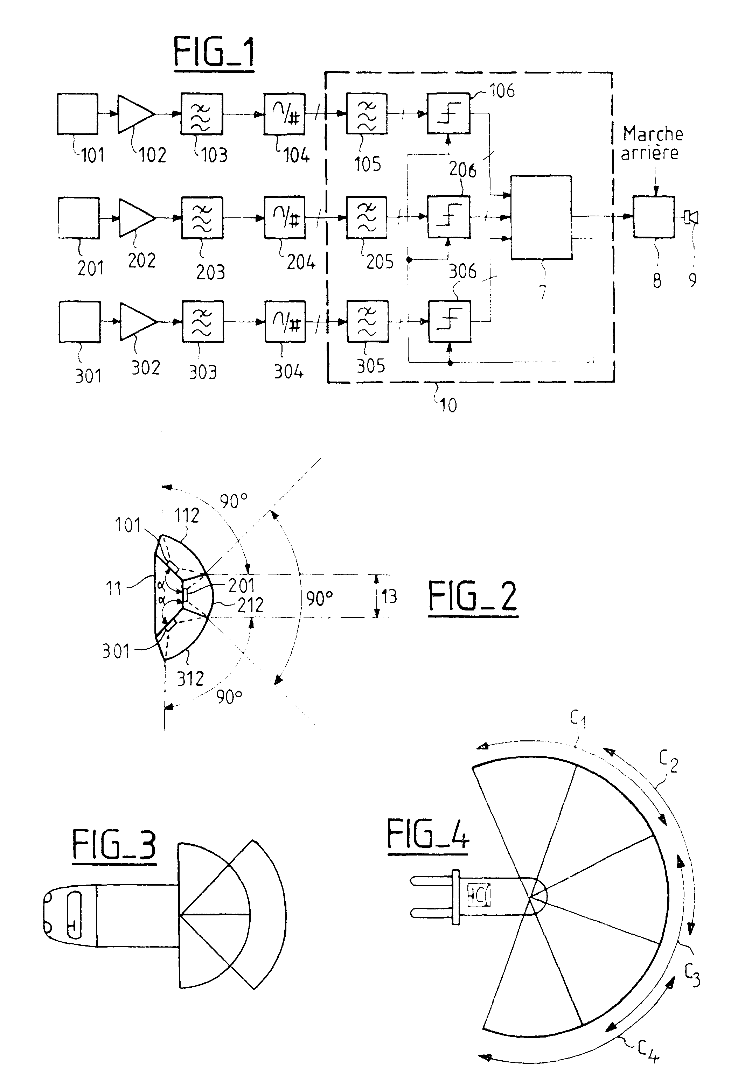

La figure 1 représente un dispositif avertisseur à détection de présence par infrarouge passif. Dans l'exemple représenté, le dispositif comporte:
- des capteurs pyro-électriques 101, 201, 301 infrarouges qui fournissent chacun une information électrique en fonction d'une variation thermique dans une gamme de température donnée (par exemple, la société HAMAMATSU commercialise sous la référence P4488 de tels capteurs fonctionnant dans une gamme de température englobant la température du corps humain) ;
- des amplificateurs 102, 202, 302 qui sont reliés respectivement aux capteurs 101, 201, 301 afin d'obtenir des signaux amplifiés d'une amplitude par exemple de l'ordre de 5 V pour une information électrique d'amplitude maximale;
- des filtres analogiques 103, 203, 303 qui reçoivent les signaux amplifiés respectivement des amplificateurs 102, 202, 302 et fournissent des signaux filtrés, les filtres analogiques 103, 203, 303 étant des filtres passe-bas dont on fixe la fréquence de coupure de manière à rejeter les parasites dus à l'éclairage électrique (deux fois la fréquence du secteur), à d'éventuelles sous-porteuses de télécommandes infrarouge, à des moteurs, et divers rayonnement HF d'origine radio;
- des circuits de conversion numérique 104, 204, 304 qui reçoivent les signaux filtrés respectivement des filtres analogiques 103, 203, 303, et fournissent des valeurs numériques, les circuits de conversion numérique 104, 204, 304 effectuant un échantillonnage à une fréquence égale au moins au double de la fréquence de coupure des filtres analogiques 103, 203, 303;
- des filtres numériques 105, 205, 305 qui reçoivent les valeurs numériques respectivement des circuits de conversion numérique 104, 204, 304 et fournissent des valeurs filtrées, les filtres numériques 105, 205, 305 étant des filtres passe-bas dont le but est de rejeter le bruit de conversion;
- des circuits de discrimination 106, 206, 306 qui reçoivent les valeurs filtrées respectivement des filtres numériques 105, 205, 305 et fournissent chacun une information de présence relative à chaque capteur 101, 201, 301, les circuits de discrimination disposant par ailleurs d'une entrée de commande pour déterminer si chaque circuit de discrimination 106, 206, 306 fonctionne dans un mode de détection ou dans un mode d'étalonnage;
- un circuit de contrôle 7 qui reçoit les informations de présence de tous les circuits de discrimination 106, 206, 306, le circuit de contrôle 7 disposant par ailleurs d'une sortie de validation de présence et d'une sortie de commande pour déclencher l'étalonnage des circuits de discrimination 106, 206, 306;
- un oscillateur commandé 8 disposant de deux entrées et d'une sortie de signal, l'une des entrées recevant un signal d'activation, par exemple correspondant à l'activation de la marche arrière d'un véhicule et l'autre entrée étant connectée à la sortie de validation de présence du circuit de contrôle 7, et l'oscillateur commandé 8 fournissant sur sa sortie un train d'onde à un haut parleur 9 lorsque les deux entrées sont actives simultanément.

Pour la réalisation des filtres numériques 105, 205, 305, des circuits de discrimination 106, 206, 306, et du circuit de contrôle 7, un micro-contrôleur 10 est préférentiellement utilisé pour émuler les différents circuits. Les filtres numériques 105, 205, 305 peuvent être réalisés de manière simple et efficace par exemple en faisant la moyenne de cinq valeurs parmi sept valeurs successives en ayant pris soin de retirer les valeurs extrêmes, c'est à dire les valeurs minimum et maximum, des sept valeurs successives. Les circuits de discrimination 106, 206, 306 fonctionnent comme des comparateurs à seuil en fonctionnement normal et disposent d'un mode d'étalonnage qui sera expliqué par la suite. Le circuit de contrôle 7 sert d'une part à établir qu'il y a une présence ou non en fonction des informations de présence des différents circuits de discrimination 106, 206, 306 et d'autre part à gérer l'étalonnage des circuits de discrimination 106, 206, 306. De préférence, l'étalonnage se fait toutes les secondes, par exemple pendant une durée fixe de 100 ms.

Sur le schéma de la figure 1, il est représenté un détecteur à trois capteurs mais il est tout à fait possible d'utiliser un système utilisant un unique capteur. Le choix de trois capteurs ou plus permet d'avoir une meilleure couverture de l'espace se situant derrière le véhicule. En effet, le champ couvert par un capteur infrarouge est défini par des lentilles de Fresnel. Or, il est coûteux d'obtenir des lentilles de Fresnel pour couvrir un angle de 180° ou plus et disposant de peu d'angles morts, les lentilles de Fresnel étant constituées d'une pluralité de lentilles formant des cônes de détection qui s'additionnent. Par ailleurs, la multiplicité des capteurs permet d'obtenir un recoupement de zone entre capteurs ce qui fiabilise le système.

La figure 2 montre un exemple de disposition des trois capteurs 106, 206, 306 sur un support 11 formant un angle α de 135° entre les capteurs 101, 201, 301. Trois lentilles de Fresnel 112, 212, 312 sont disposées respectivement en face de chaque capteur 101, 201, 301. Chaque lentille de Fresnel 112, 212, 312 est formée d'une pluralité de lentilles afin de permettre une couverture de 90° par capteur. Par ailleurs, la zone centrale (la plus importante) est couverte par deux capteurs à l'exception d'une bande 13 d'environ 5 cm de large, largeur qui correspond environ à la largeur du capteur 201 et de la lentille centrale 212, largeur toujours inférieure à la largeur d'un être humain. Les lentilles de Fresnel définissent également une portée maximale des capteurs qu'il convient de fixer en fonction de la vitesse maximale du véhicule en marche arrière.

Avec le dispositif défini par les figures 1 et 2, lorsqu'une personne apparaît dans le champ du dispositif de détection, au moins un des capteurs 101, 201, 301 détecte une variation de température dans la gamme de température de travail dudit capteur. La détection provoque une augmentation de la tension aux bornes du capteur de quelques dizaines de milli-volt. L'amplificateur analogique 102, 202, 302 associé audit capteur va amplifier cette variation par exemple avec un gain de 20. Le filtre analogique 103, 203, 303 correspondant va éliminer, par exemple, les fréquences supérieures à 50 Hz avec une atténuation de 40 dB par décade. Le circuit de conversion numérique 104, 204, 304 va ensuite échantillonner, par exemple à 1 kHz, puis numériser, par exemple sur 10 bits, le signal filtré correspondant. Le signal échantillonné est ensuite filtré puis comparé à un seuil. Si au moins un des circuits de discrimination 106, 206, 306 indique que le signal échantillonné est supérieur au seuil dudit circuit de discrimination alors un signal actif est fourni sur la sortie de validation de présence du circuit de contrôle 7. L'oscillateur commandé va fournir, si une présence est détectée et si le véhicule est en marche arrière, un train d'onde, par exemple toutes les demi-seconde et durant un quart de seconde à une fréquence de 1 kHz. Le haut-parleur 9 va émettre en réponse au train d'onde le bip-bip caractéristique des bruiteurs de véhicule. La désactivation du signal présent sur la sortie de validation peut se faire après une certaine durée (par exemple une demi seconde) afin d'être sûr que le signal d'avertissement soit entendu même si la présence détectée n'est détectée que pendant une durée très brève.

Par ailleurs, le circuit de commande 7 va également gérer l'étalonnage des seuils des circuits de discrimination. Le circuit de contrôle va utiliser une machine d'état pour partitionner le temps de telle sorte que le système s'étalonne par exemple toutes les secondes, afin que le seuil de chaque circuit de discrimination soit le plus proche possible du bruit thermique ambiant. Le bruit thermique ambiant gênant correspond à des déplacements de sources de chaleurs dont la température n'est pas nécessairement dans la gamme de température des capteurs infrarouges 101, 201, 301. En effet, un capteur sensible à une gamme de température fournit également de manière atténuée des informations relatives à des températures hors de la gamme dudit capteur. Il est à noter que pour des capteurs de détection de mouvement, la vitesse de déplacement du capteur influence l'amplitude de la composante variable du bruit ambiant. Dans une variante disposant d'une pluralité de capteurs, on effectue l'étalonnage uniquement si tous les capteurs indiquent la même chose simultanément en sortie des circuits de discrimination.

Un procédé d'étalonnage simple et efficace consiste à effectuer pour chaque circuit de discrimination plusieurs mesures successives pendant une durée prédéfinie par exemple 100 ms. A la mesure minimale, on additionne une valeur prédéfinie correspondant par exemple à dix pas de quantification d'un circuit de conversion numérique 104, 204, 304, puis on mémorise le seuil ainsi obtenu pour chaque circuit de discrimination 106, 206, 306.

Bien que relativement simple, un tel système d'étalonnage fonctionne très bien car le bruit ambiant varie peu pendant la durée d'étalonnage et entre deux périodes d'étalonnage consécutives. Même si une personne apparait à un ou plusieurs des capteurs 101, 201, 301 pendant l'étalonnage, le système continue de bien fonctionner. En effet, le signal résultant de la présence d'une personne en provenance des capteurs est fortement variable et même si le seuil enregistré ne correspond pas au niveau de bruit réel, il est de toute façon inférieur à la variation maximale causé par la présence d'une personne dans l'environnement correspondant.

Les figures 3 et 4 représentent des véhicules en vue de dessus avec les zones de détection de dispositifs comportant plusieurs capteurs.

La figure 3 correspond à un camion. Les capteurs sont disposés à l'arrière sur l'axe central du véhicule. Le dispositif utilisé comporte trois capteurs disposés comme sur la figure 2. Cependant, on tient compte de la manoeuvrabilité et de la vitesse maximale du camion en marche arrière (environ 20 km/H). A titre d'exemple, on peut utiliser des lentilles de Fresnel latérales ayant une portée de 4 m et une lentille de Fresnel centrale ayant une portée de 6 m. Un camion en manoeuvre roue rarement à sa vitesse maximale mais plutôt à des vitesses inférieures à 10 km/H ce qui laisse un peu plus de deux secondes pour réagir. Si on augmente le nombre de capteurs, il est possible de jouer sur les portées des lentilles de Fresnel pour couvrir uniquement la zone de risque derrière le camion sans couvrir les zones latérales où le camion ne peut matériellement pas aller.

La figure 4 représente un chariot élévateur. Les capteurs sont dans la zone arrière sur le capot du chariot élévateur de manière légèrement surélevée afin de ne pas obstruer le champ de vision des capteurs. Les chariots élévateurs disposent d'une vitesse en marche arrière élevé (45 km/H pour certains) et d'une grande manoeuvrabilité (allant jusqu'au demi-tour sur place). L'utilisation de la marche arrière se fait soit pour manoeuvrer à faible vitesse, sans regarder derrière en général, soit pour se déplacer à une vitesse élevée, le conducteur étant tourné de trois quarts ayant une visibilité diminuée sur l'un des cotés. Il est préférable pour ces véhicules de surveiller latéralement la présence de personnes. A titre d'exemple, on peut utiliser un dispositif à quatre capteurs C1, C2, C3 et C4 couvrant chacun un angle de 90° pour couvrir un angle total de 225°, la portée des lentilles de Fresnel étant de 12 m pour chaque capteur. On peut augmenter le nombre de capteurs afin de couvrir une surface plus importante avec plus de précision.

D'une manière générale, l'invention peut être facilement adaptée à tout type de véhicule terrestre qui doit se déplacer dans une direction à faible visibilité pour le conducteur. Les positions du dispositif de détection sur le véhicule ne sont pas limitées aux exemples des figures 3 et 4. L'homme du métier peut placer les dispositifs de détection partout où les capteurs ont un champ de vision dégagé dans la direction à faible visibilité.

De nombreuses variantes de l'invention sont à la portée de l'homme du métier. L'utilisation d'un micro-contrôleur 10 a pour but de simplifier la mise au point du dispositif de détection. En effet, le dispositif de détection peut être réalisé à l'aide de composants numériques indépendant voire même uniquement à l'aide de composants analogiques mais une telle réalisation sera plus coûteuse à modifier. L'utilisation du micro-contrôleur permet de modifier le programme du micro-contrôleur pour changer simplement différentes fonctions réalisées dans le micro-contrôleur.

Par ailleurs, les amplificateurs 102, 202, 302, les filtres analogiques 103, 203, 303, les circuits de conversion 104, 204, 304, et les filtres numériques 105, 205, 305 constituent des moyens de mise en forme dont de nombreuses variantes sont connues de l'homme du métier. Il importe d'amplifier le signal provenant du capteur pour que celui-ci soit exploitable. Il importe également de filtrer le bruit provenant notamment du secteur à l'aide d'un filtre passe-bas. Il est important de ne pas prendre une fréquence de coupure trop basse car cela risque de nuire à la détection. Si l'on numérise le signal, on peut se permettre d'avoir des filtres analogiques de performance médiocre à condition de compenser à l'aide de filtres numériques performants qui demandent des micro-contrôleurs complexes.

Il est également possible d'utiliser des convertisseurs analogique/numérique de très bonne qualité (mais coûteux) qui rendent inutiles les filtres numériques. Il est également possible d'utiliser des commutateurs analogiques combinés avec un unique convertisseur analogique/numérique pour diminuer le nombre de convertisseurs mais cela aura pour effet d'augmenter les erreurs de conversion.

Les circuits de discrimination 106, 206, 306 sont programmés pour disposer de moyens d'étalonnage. Ces moyens d'étalonnage ne se limitent pas aux moyens décrits précédemment. En effet, on peut par exemple mesurer, lors de chaque étalonnage, un seuil de bruit moyen et l'enregistrer directement sans le modifier. D'autres procédés d'étalonnage pourront être programmés facilement à l'aide du micro-contrôleur 7. La durée de l'étalonnage peut ne pas être fixe. De même, la durée entre deux étalonnages n'est pas nécessairement fixe pourvu qu'elle soit suffisamment régulière pour considérer le bruit ambiant comme étant statique.

Le dispositif de détection peut également être utilisé dans d'autres applications qu'un avertisseur pour marche arrière. Un tel dispositif peut être utilisé par exemple pour de la surveillance dans un lieu à forte variation de bruit thermique. Il est aussi possible de détecter divers éléments en utilisant des capteurs qui travaillent dans une gamme de fréquence appropriée.

## Revendications

1. Dispositif avertisseur comportant une entrée de commande, et des moyens avertisseurs (9), un dispositif de détection de source chaude qui comporte au moins un capteur infrarouge (101) fonctionnant dans une gamme de température définie et fournissant une information de présence relative aux déplacements d'un type de source chaude ayant une température comprise dans la gamme de températures définie, et en ce que les moyens avertisseurs (9) s'activent uniquement si l'entrée de commande est activée et si le dispositif de détection indique la présence du type de source chaude, caractérisé en ce que le dispositif de détection comporte en outre:
- des moyens de déclenchement (7) pour déclencher régulièrement de manière répétitive un étalonnage, et
- des moyens (106) pour enregistrer un nouveau seuil de référence lors de chaque étalonnage.

2. Dispositif avertisseur selon la revendication 1, caractérisé en ce que le dispositif de détection de source chaude comporte:
- des moyens de mise en forme (102 à 105) pour mettre en forme l'information de présence, et
- des moyens de comparaison (106) pour comparer l'information de présence avec un seuil de référence afin de déterminer la présence ou l'absence d'un type de source chaude défini.

3. Dispositif avertisseur selon l'une des revendications 1 ou 2, caractérisé en ce que le dispositif de détection comporte au moins trois capteurs (101, 201, 301), chaque capteur ayant des moyens de mise en forme (102 à 105, 202 à 205, 302 à 305) qui lui sont propres.

4. Dispositif avertisseur selon l'une des revendications 1 à 3, caractérisé en ce que les moyens avertisseurs sont des moyens sonores.

5. Véhicule terrestre, ayant la possibilité de rouler dans une direction à visibilité réduite pour le conducteur, comportant le dispositif avertisseur de l'une des revendications 1 à 4, et l'entrée de commande étant activée lorsque le véhicule se dirige dans la direction à visibilité réduite.

6. Procédé de détection de source chaude pour la mise en oeuvre du dispositif de la revendication 1, caractérisé en ce :
- on produit au moins une information de présence relative aux déplacements d'une éventuelle source chaude à l'aide d'un capteur infrarouge (101) fonctionnant dans une gamme de températures définie,
- on met en forme l'information de présence,
- on compare l'information de présence après mise en forme avec un seuil de référence pour déterminer la présence ou l'absence d'un type de source chaude défini,
- on déclenche régulièrement de manière répétitive un étalonnage du dispositif, et
- on enregistre un nouveau seuil de référence lors de chaque étalonnage.

7. Procédé selon la revendication 6, caractérisé en ce que l'étalonnage comporte une succession de mesures de bruit ambiant que l'on utilise pour déterminer le nouveau seuil de référence.

8. Procédé selon l'une des revendications 6 ou 7 caractérisant ce que au moins un étalonnage est fait à chaque seconde.

## Claims

1. Warning device having a command input, and warning means (9), a heat source detection device which has at least one infrared sensor (101) operating within a defined temperature range and supplying presence information relating to the movements of a type of heat source having a temperature lying within the defined temperature range, and in that the warning means (9) are activated solely if the command input is activated and the detection device indicates the presence of the type of heat source, characterised in that the detection device also has:
- triggering means (7) for regularly triggering a calibration repetitively, and
- means (106) for recording a new reference threshold at the time of each calibration.

2. Warning device according to Claim 1, characterised in chat the heat source detection device has:
- formatting means (102-105) for formatting the presence information, and
- comparison means (106) for comparing the presence information with a reference threshold in order to determine the presence or absence of a defined type of heat source.

3. Warning device according to one of Claims 1 or 2,
characterised in that the detection device has at least three sensors (101, 201, 301), each sensor having formatting means (102 to 105, 202 to 205, 302 to 305) which are peculiar to it.

4. Warning device according to one Claims 1 to 3,
characterised in that the warning means are audible means.

5. Land vehicle having the possibility of travelling in a direction with reduced visibility for the driver, having the warning device of one of Claims 1 to 4, and the command input being activated when the vehicle is heading in the direction with reduced visibility.

6. Heat source detection method for use of the device of Claim 1, characterised in that:
- at least one item of presence information is produced relating to the movements of any heat source by means of an infrared sensor (101) operating within a defined temperature range,
- the presence information is formatted,
- the presence information after formatting is compared with a reference threshold in order to determine the presence or absence of a defined type of heat source,
- a calibration of the device is regularly triggered repetitively, and
- a new reference threshold is recorded at the time of each calibration.

7. Method according to Claim 6, characterised in that the calibration includes a succession of ambient noise measurements which are used to determine the new reference threshold.

8. Method according to one of Claims 6 or 7, characterised in that at least one calibration is carried out each second.

## Patentansprüche

1. Warnvorrichtung, die einen Steuereingang und Warnmittel (9) aufweist, mit einer Vorrichtung zur Erfassung einer Wärmequelle, die mindestens einen Infrarot-Sensor (101) aufweist, der in einem definierten Temperaturbereich arbeitet und eine Anwesenheitsinformation in Bezug auf die Bewegungen einer Art von Wärmequelle liefert, deren Temperatur im definierten Temperaturbereich liegt, wobei die Warnmittel (9) nur dann aktiv werden, wenn der Steuereingang aktiviert wird und wenn die Erfassungsvorrichtung die Anwesenheit der Art von Wärmequelle anzeigt, dadurch gekennzeichnet, daß die Erfassungsvorrichtung weiter aufweist:
- Auslösemittel (7), um regelmäßig in wiederholter Weise eine Kalibrierung auszulösen, und
- Mittel (106), um bei jeder Kalibrierung einen neuen Bezugsschwellwert zu speichern.

2. Warnvorrichtung nach Anspruch 1, dadurch gekennzeichnet, daß die Vorrichtung zur Erfassung einer Wärmequelle aufweist:
- Umwandlungsmittel (102 bis 105), um die Anwesenheitsinformation umzuwandeln, und
- Vergleichsmittel (106), um die Anwesenheitsinformation zur Feststellung der Anwesenheit oder der Abwesenheit einer bestimmten Art von Wärmequelle mit einem Bezugsschwellwert zu vergleichen.

3. Warnvorrichtung nach einem der Ansprüche 1 oder 2, dadurch gekennzeichnet, daß die Erfassungsvorrichtung mindestens drei Sensoren (101, 201, 301) aufweist, wobei jeder Sensor ihm eigene Umwandlungsmittel (102 bis 105, 202 bis 205, 302 bis 305) aufweist.

4. Warnvorrichtung nach einem der Ansprüche 1 bis 3, dadurch gekennzeichnet, daß die Warnmittel akustische Mittel sind.

5. Landfahrzeug mit der Möglichkeit, in einer Richtung mit reduzierter Sichtweite für den Fahrer zu fahren, das die Warnvorrichtung gemäß einem der Ansprüche 1 bis 4 aufweist, bei der der Steuereingang aktiviert wird, wenn das Fahrzeug in die Richtung mit reduzierter Sichtweite fährt.

6. Verfahren zur Erfassung einer Wärmequelle zur Anwendung der Vorrichtung gemäß Anspruch 1, dadurch gekennzeichnet, daß
- mindestens eine Anwesenheitsinformation in Bezug auf die Bewegungen einer möglichen Wärmequelle mit Hilfe eines Infrarot-Sensors (101) erzeugt wird, der in einem definierten Temperaturbereich arbeitet,
- die Anwesenheitsintormation umgewandelt wird,
- die Anwesenheitsinformation nach der Umwandlung mit einem Bezugsschwellwert verglichen wird, um die Anwesenheit oder die Abwesenheit einer definierten Art von Wärmequelle festzustellen,
- in regelmäßigen Abständen wiederholt eine Kalibrierung der Vorrichtung ausgelöst wird, und
- bei jeder Kalibrierung ein neuer Bezugsschwellwert gespeichert wird.

7. Verfahren nach Anspruch 6, dadurch gekennzeichnet, daß die Kalibrierung eine Folge von Messungen des Umgebungrauschens enthält, die verwendet wird, um den neuen Bezugsschwellwert zu bestimmen.

8. Verfahren nach einem der Ansprüche 6 oder 7, dadurch gekennzeichnet, daß in jeder Sekunde mindestens eine Kalibrierung stattfindet.
